# EUROPÄISCHE PATENTANMELDUNG

(11) **EP 3 553 614 A1**
(43) Veröffentlichungstag der Anmeldung: **16.10.2019**
(21) Anmeldenummer: 18020149.3
(22) Anmeldetag: 13.04.2018
(51) Int. Cl.: G05B 23/02

(54) **VERFAHREN ZUM ERSTELLEN EINES MODELLS EINER TECHNISCHEN VORRICHTUNG UND VERFAHREN ZUM ÜBERWACHEN EINER TECHNISCHEN VORRICHTUNG AUF GRUNDLAGE EINES MODELLS**

(71) Anmelder: Linde Aktiengesellschaft, 80331 München (DE)
(72) Erfinder: Biegner, André, 81479 München (DE); Heckmann, Christoph, 85586 Poing (DE); Franz, Alexander, 86161 Augsburg (DE); Forstner, Ingo, 82377 Penzberg (DE)
(74) Vertreter: Meilinger, Claudia Sabine

(57) **Zusammenfassung**

Verfahren zum Erstellen eines Modells einer technischen Vorrichtung, insbesondere einer Maschine, eines Apparats oder einer Anlage, wobei basierend auf einer theoretischen Betrachtung der Vorrichtung theoretische kausale Zusammenhänge zwischen Sensorwerten von Sensoren der Vorrichtung bestimmt werden (211), wobei basierend auf einer statistischen Auswertung von durch die Sensoren erfassten Sensorwerten statistische Korrelationen zwischen den Sensorwerten der Sensoren der Vorrichtung bestimmt werden (212), wobei die theoretischen kausalen Zusammenhänge und die statistischen Korrelationen miteinander verglichen werden (213) und wobei basierend auf dem Vergleichsergebnis aus den theoretischen kausalen Zusammenhängen und den statistischen Korrelationen tatsächliche kausale Zusammenhänge zwischen den Sensorwerten von Sensoren der Vorrichtung bestimmt, insbesondere ausgewählt werden (213), und wobei basierend auf den tatsächlichen kausalen Zusammenhängen zwischen den Sensorwerten von Sensoren der Vorrichtung ein Modell der Vorrichtung bestimmt wird (214), sowie ein Verfahren zum Überwachen einer Vorrichtung (100), wobei ein solches Modell der Vorrichtung (100) verwendet wird.

## Beschreibung

Die Erfindung betrifft ein Verfahren zum Erstellen eines Modells einer technischen Verrichtung und ein Verfahren zum Überwachen einer technischen Vorrichtung, wobei ein solches Modell der technischen Vorrichtung verwendet wird.

### Stand der Technik

Für einen effektiven Betrieb von technischen Vorrichtungen wie Maschinen, Apparaten bzw. Anlagen ist es von Bedeutung, Fehler und Verschleißerscheinungen der Vorrichtung frühzeitig erkennen zu können, um Schäden und Ausfälle der Vorrichtung vermeiden zu können. Zu diesem Zweck werden oftmals theoretische Modelle der Vorrichtung erstellt und im regulären Betrieb werden Ist-Zustände bzw. erfasste Messwerte mit dem Modell verglichen. Daher ist es von Bedeutung, präzise Modelle von Vorrichtungen bereitstellen zu können, welche einen fehlerfreien Betrieb der Vorrichtung repräsentativ abbilden können, so dass mit Hilfe der Modelle zuverlässig Fehler der Vorrichtung erkannt werden können.

### Offenbarung der Erfindung

Ausgehend von diesem Stand der Technik werden ein Verfahren zum Erstellen eines Modells einer technischen Vorrichtung, ein Verfahren zum Überwachen einer technischen Vorrichtung, wobei ein solches Modell der technischen Vorrichtung verwendet wird, sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Als technische Vorrichtung sei in diesem Zusammenhang insbesondere eine Einheit oder ein System verschiedener Einheiten zu verstehen zum Ausführen eines technischen Prozesses, insbesondere eines verfahrens-, regelungs- und/oder steuerungstechnischen Prozesses. Die technische Vorrichtung kann insbesondere als eine Maschine ausgebildet sein, also insbesondere als eine Vorrichtung zur Energie- bzw. Kraftumsetzung, und/oder als ein Apparat, also insbesondere eine Vorrichtung zur Stoff- bzw. Materieumsetzung. Ferner kann die technische Vorrichtung auch insbesondere als eine Anlage ausgebildet sein, also insbesondere als ein System aus einer Vielzahl von Komponenten, die jeweils beispielsweise Maschinen und/oder Apparate sein können.

Im Rahmen der vorliegenden Erfindung ist es vorgesehen, tatsächliche kausale Zusammenhänge zwischen Sensorwerten von Sensoren der Vorrichtung zu bestimmen. Als tatsächliche kausale Zusammenhänge zwischen Sensorwerten sei in diesem Zusammenhang insbesondere zu verstehen, dass eine kausale Ursache-Wirkungs-Beziehung zwischen derartigen Sensorwerten besteht und dass derartige Sensorwerte insbesondere direkt aufeinander Einfluss haben. Beispielsweise kann eine Veränderung von Sensorwerten eines ersten Sensors direkt kausal eine Veränderung von Sensorwerten eines zweiten Sensors bedingen. Etwa kann eine erste Temperatur an einem ersten Lager direkten Einfluss auf eine zweite Temperatur an einem zweiten Lager haben, so dass eine Korrelation zwischen diesen beiden Temperaturen besteht. Im Rahmen der Erfindung werden eine rein theoretische Betrachtung der Vorrichtung und eine rein statistische Auswertung von Sensorwerten der Vorrichtung gegeneinander plausibilisiert, um diese tatsächlichen kausalen Zusammenhänge zu erkennen.

Im Rahmen des Verfahrens werden basierend auf einer theoretischen Betrachtung der Vorrichtung theoretische kausale Zusammenhänge zwischen Sensorwerten von Sensoren der Vorrichtung bestimmt. Zweckmäßigerweise werden im Zuge dieser theoretischen Betrachtung physikalische und/oder technische und/oder chemische Beziehungen in der Vorrichtung berücksichtigt, insbesondere physikalische und/oder technische und/oder chemische Wechselwirkungen zwischen Komponenten der Vorrichtung. Insbesondere wird eine rein theoretische Betrachtung von physikalischen Größen der Vorrichtung durchgeführt, welche als Sensorwerte mittels in der Vorrichtung angeordneter Sensoren erfassbar sind.

Die theoretischen kausalen Zusammenhänge beschreiben insbesondere theoretisch postulierte Ursache-Wirkungs-Beziehungen zwischen einzelnen Sensorwerten bzw. stellen insbesondere theoretisch vorhergesagte, plausible Zusammenhänge zwischen einzelnen Sensorwerten dar, basierend auf einer rein theoretischen Beschreibung der Vorrichtung. Zweckmäßigerweise ist es zum Bestimmen der theoretischen kausalen Zusammenhänge nicht nötig, tatsächlich Sensorwerte zu erfassen. Insbesondere wird somit ein detailliertes theoretisches Verständnis der Vorrichtung zum Erstellen des Modells eingebracht. Beispielsweise können zum Bestimmen der theoretischen kausalen Zusammenhänge historische oder exemplarische Datensätze insbesondere bei gleichen Komponenten der Vorrichtung verwendet werden. Es versteht sich, dass zum Bestimmen der theoretischen kausalen Zusammenhänge zweckmäßigerweise auch Sensorwerte erfasst werden können, beispielsweise im Zuge von Echtzeitmessungen .

Ferner werden im Rahmen des Verfahrens basierend auf einer statistischen Auswertung von durch die Sensoren erfassten Sensorwerten statistische Korrelationen zwischen den Sensorwerten der Sensoren der Vorrichtung bestimmt. Beispielsweise können diese Sensorwerte zu einem früheren Zeitpunkt erfasst worden sein und können beispielsweise aus Datenarchiven entnommen werden. Insbesondere wird somit eine Datenanalyse von im wirklichen Betrieb der Vorrichtung erfassten Sensorwerten durchgeführt. Insbesondere erfolgt somit eine rein statistische Betrachtung der Sensorwerte. Mittels statistischer Methoden wird dabei insbesondere nach Korrelationen zwischen Sensorwerten gesucht, zweckmäßigerweise ohne dabei auf theoretische, physikalische Zusammenhänge Rücksicht zu nehmen.

Die theoretischen kausalen Zusammenhänge und die statistischen Korrelationen werden miteinander verglichen und basierend auf dem Vergleichsergebnis werden aus den theoretischen kausalen Zusammenhängen und den statistischen Korrelationen tatsächliche kausale Zusammenhänge zwischen den Sensorwerten von Sensoren der Vorrichtung bestimmt, insbesondere ausgewählt. Im Zuge der statistischen Auswertung ist es nicht auszuschließen, dass auch rein zufällige statistische Korrelationen, sog. Scheinkorrelationen, erkannt werden, welche jedoch auf keiner physikalischen, theoretischen Grundlage und keinen keiner Ursache-Wirkungs-Beziehung basieren. Umgekehrt besteht ebenso die Möglichkeit, dass basierend auf theoretischen Betrachtung der Vorrichtung theoretische kausale Zusammenhänge vorhergesagt werden, welche sich letztendlich in tatsächlich erfassten Sensorwerten nicht wiederfinden, beispielsweise weil nicht beachtete kausale Beziehungen Auswirkungen auf vorhergesagte theoretische kausale Zusammenhänge haben. Um derartige Inkonsistenzen bzw. Diskrepanzen nicht in das Modell der Vorrichtung einfließen zu lassen, werden die theoretischen kausale Zusammenhänge und die statistischen Korrelationen im Rahmen des Verfahrens miteinander verglichen und somit gegeneinander plausibilisiert.

Basierend auf den tatsächlichen kausalen Zusammenhängen zwischen den Sensorwerten von Sensoren der Vorrichtung wird ein Modell der Vorrichtung bestimmt. Somit wird im Rahmen des Verfahrens ein Modell bestimmt, welches sowohl auf theoretischen Vorhersagen als auch auf statistischen Auswertungen von Sensorwerten basiert.

Um ein repräsentatives Modell der Vorrichtung erstellen zu können, ist es von Bedeutung zu wissen, wie einzelne Komponenten der Vorrichtung konkret betrieben werden bzw. wie verschiedene Komponenten miteinander wechselwirken und somit wie an den entsprechenden Komponenten erfasste Sensorwerte miteinander in Beziehung stehen. Beispielsweise ist zur Interpretation und Bewertung einer Vibrationsamplitude an einer Lagerstelle eines Motors auch die zugehörige Drehzahl des Motors nötig. Ohne Kenntnis der Drehzahl ist es zumeist nicht möglich, eine Aussage darüber zu treffen, ob sich die Vibrationsamplitude in einem zulässigen Bereich bewegt. Durch Berücksichtigung der tatsächlichen kausalen Zusammenhänge im Rahmen des vorliegenden Verfahrens kann somit ein besonders repräsentatives Modell der Vorrichtung erstellt werden.

Um im Rahmen herkömmlicher Methoden Modelle von Vorrichtungen zu bestimmen, werden üblicherweise erfasste Sensorwerte im Zuge einer Datenanalyse mathematisch bzw. statistisch ausgewertet. Basierend auf den typischen Sensorwerten, welche mittels der Sensoren in der Regel erfasst werden, werden beispielsweise entsprechende Schwell- bzw. Grenzwerte bestimmt, innerhalb welcher sich die Sensorwerte regulär bewegen. Zu diesem Zweck können beispielsweise statistische Methoden wie Mittelwert- oder Varianzberechnung von Datensätzen an Sensorwerten verwendet werden. Mittels derartiger herkömmlicher Methoden werden zumeist einzelne Sensoren für sich alleine betrachtet und nicht im Zusammenhang mit den restlichen Sensoren bzw. Sensorwerten der Vorrichtung. Kausale Zusammenhänge zwischen Sensoren bzw. Sensorwerten können dabei insbesondere nicht erkannt werden. Insbesondere ist es mittels derartigen herkömmlich bestimmten Schwellwerten nur möglich, bereits bekannte Fehler der Vorrichtung zu erkennen, insbesondere nur Fehler, welche während der Erfassung der ausgewerteten Sensorwerte aufgetreten sind.

Im Gegensatz dazu wird das Modell im Rahmen des vorliegenden Verfahrens nicht durch reine Datenanalyse mittels statistischer, mathematischer Methoden bestimmt. In die Bestimmung des Modells fließt insbesondere Know-How und ein technisches, physikalisches bzw. chemisches Verständnis der Vorrichtung ein. Sensorwerte einzelner Sensoren werden in einen größeren Kontext gebracht und nicht für sich alleine betrachtet. Es erfolgt insbesondere eine multivariate Betrachtung von Zeitreihen im Gesamtbild im Vergleich zu einer herkömmlichen, klassischen univariaten (Einzelbetrachtung) von Sensormesswerten. Beziehungen einzelner Sensoren bzw. Sensorwerte zueinander werden erkannt und für die Bestimmung des Modells verwendet.

Durch das vorliegende Verfahren kann somit ein präzises Modell der Vorrichtung erstellt werden, welches einen fehlerfreien Betrieb der Vorrichtung repräsentativ abbildet. Mittels des bestimmten Modells kann als weiterer Aspekt der Erfindung besonders effektiv eine Überwachung der Vorrichtung auf Fehler hin durchgeführt werden und es können zuverlässig Fehler der Vorrichtung erkannt werden. Insbesondere kann mit Hilfe des Modells auch ein potentieller Fehler der Vorrichtung erkannt werden, wenn sich beispielsweise ein spezieller Sensor für sich alleine betrachtet in seinem typischen Sensorwertrahmen befindet, aber im Kontext mit den konkreten Sensorwerten anderer Sensoren auffällige Werte erfasst. Das Modell ermöglicht es somit, nicht nur bekannte Fehler frühzeitig zu erkennen, sondern insbesondere auch neue Fehler, welche in der Vorrichtung bisher noch nie aufgetreten sind.

Vorteilhafterweise werden zur Bestimmung des Modells der Vorrichtung Koeffizienten bezüglich der tatsächlichen kausalen Zusammenhänge zwischen den Sensorwerten von Sensoren der Vorrichtung bestimmt. Beispielsweise können zu diesem Zweck durch die Sensoren erfasste Sensorwerte ausgewertet werden, um die tatsächlichen kausalen Zusammenhänge präzise mathematisch beschreiben zu können.

Gemäß einer bevorzugten Ausführungsform wird zur Bestimmung des Modells der Vorrichtung eine lineare Regression durchgeführt, insbesondere basierend auf durch die Sensoren erfassten Sensorwerten. Insbesondere kann mit Hilfe der linearen Regression eine mathematische Beschreibung der tatsächlichen kausalen Zusammenhänge zwischen den Sensorwerten bestimmt werden und es können insbesondere die oben erläuterten Koeffizienten bestimmt werden. Zweckmäßigerweise kann für jeden tatsächlichen kausalen Zusammenhang basierend auf den Sensorwerten der entsprechenden Sensoren jeweils eine lineare Regression durchgeführt werden.

Besonders vorteilhaft wird das Modell basierend auf durch die Sensoren erfassten Sensorwerten plausibilisiert, insbesondere verbessert bzw. aktualisiert bzw. präzisiert. Somit wird zweckmäßigerweise ein lernendes Modell bereitgestellt, welches beispielsweise auch im regulären Betrieb der Vorrichtung mit Hilfe der dort erfassten Vielzahl von Sensorwerten stets weiter präzisiert werden kann. Insbesondere kann dieses Plausibilisieren bzw. diese Präzisierung mit Hilfe der linearen Regression erreicht werden.

Gemäß einem weiteren Aspekt der Erfindung wird basierend auf dem Modell der Vorrichtung eine Überwachung der Vorrichtung durchgeführt, insbesondere eine Überprüfung der Vorrichtung auf Fehler hin. Für die Überwachung der Vorrichtung werden somit Sensoren zweckmäßigerweise nicht für sich alleine betrachtet, sondern es werden insbesondere auch Abhängigkeiten und kausale Zusammenhänge verschiedener Sensoren voneinander berücksichtigt. Zweckmäßigerweise wird das Modell im Zuge einer ersten Phase bzw. zu einem ersten Zeitpunkt erstellt. Während dieser ersten Phase kann die Vorrichtung beispielsweise außer Betrieb genommen werden. Beispielsweise kann diese erste Phase eine Trainings- oder Lernphase oder eine Planungs- bzw. Konstruktionsphase der Vorrichtung sein, bevor die Vorrichtung in Betrieb genommen wird. Im Zuge einer zweiten Phase, welche zeitlich nach der ersten Phase liegt, bzw. zu einem zweiten Zeitpunkt, der zeitlich nach dem ersten Zeitpunkt liegt, wird das Modell zur Überwachung der Vorrichtung verwendet. Insbesondere kann die Vorrichtung dabei in ihrem regulären Betrieb insbesondere kontinuierlich überwacht werden, um frühzeitig Fehler der Vorrichtung erkennen zu können.

Bevorzugt werden Sensorwerte durch die Sensoren erfasst und basierend auf diesen erfassten Sensorwerten und dem Modell der Vorrichtung wird bewertet, ob ein Fehler der Vorrichtung vorliegt oder nicht. Insbesondere werden dabei im regulären Betrieb der Vorrichtung die Sensorwerte erfasst und mit dem Modell verglichen bzw. mit Hilfe des Modells ausgewertet. In Abhängigkeit von entsprechenden Vergleichs- bzw. Auswertungsergebnissen wird zweckmäßigerweise bewertet, ob ein Fehler der Vorrichtung vorliegt oder nicht. Als Fehler der Vorrichtung seien in diesem Zusammenhang insbesondere ein Defekt oder zumindest ein sich andeutender Defekt oder auch Verschleißerscheinungen einer oder mehrerer Komponenten der Vorrichtung zu verstehen. Insbesondere kann das Modell zu diesem Zweck dynamische Grenzwerte umfassen, beispielsweise obere und untere Grenzwerte, die jeweils zulässige Wertebereiche für Sensorwerte definieren. Insbesondere können dynamische Wertebereiche vorgesehen sein, so dass ein Sensorwert bei zunehmendem Überschreiten von Grenzwerten zunehmend als fehlerhafter eingestuft werden kann.

Mit Hilfe des Modells können Fehler der Vorrichtung frühzeitig erkannt werden und es kann erkannten Fehlern frühzeitig entgegengewirkt werden. Ein fehlerbedingter Ausfall sowie Beschädigungen der Vorrichtung können somit insbesondere verhindert werden. Stillstände der Vorrichtung, welche zu Produktionseinbußen und erheblichen Kosten führen können, können insbesondere vermieden werden. Ein Zeitaufwand für Wartungsarbeiten kann verkürzt werden. Der Zeitpunkt für Wartungsarbeiten kann mit Hilfe des Modells zweckmäßigerweise genauer spezifiziert werden. Insbesondere kann die Effizienz der Vorrichtung erhöht werden.

Vorzugsweise werden basierend auf dem Modell der Vorrichtung Schwellwerte für Sensorwerte und/oder ein Soll-Zustand der Vorrichtung und/oder Fehlerzustände der Vorrichtung zum Überwachen der Vorrichtung bestimmt. Als Zustand der Vorrichtung sei insbesondere zu verstehen, wie einzelne Komponenten der Vorrichtung betrieben werden bzw. welche konkreten Sensorwerte im Betrieb der Vorrichtung mittels der einzelnen Sensoren erfasst werden. Der entsprechende Soll-Zustand bzw. fehlerfreie Zustand beschreibt insbesondere, dass sich alle Sensorwerte jeweils in durch die korrelationsabhängigen Schwellwerte vorgegebenen zulässigen Bereichen bewegen.

Zweckmäßigerweise kann in Abhängigkeit von den tatsächlichen kausalen Zusammenhängen der Schwellwert für Sensorwerte eines speziellen Sensors abhängig von Sensorwerten wenigstens eines anderen Sensors bestimmt werden. Der Schwellwert für Sensorwerte, die mittels eines speziellen Sensors erfasst werden, kann also insbesondere von Ist-Werten abhängen, die von einem oder mehreren anderen Sensoren erfasst werden. Beispielsweise kann ein Schwellwert für Körperschall eines Motors von der aktuellen Drehzahl des Motors abhängen. Somit kann ein Schwellwert für die Sensorwerte eines Körperschallsensors von den aktuellen Sensorwerten abhängen, welche mittels eines Drehzahlsensors erfasst werden. Der Schwellwert für Sensorwerte eines speziellen Sensors kann zweckmäßigerweise auch dynamisch als eine Funktion abhängig von Sensorwerten bzw. Messwerten von einem oder mehreren anderen Sensoren bestimmt werden. Beispielsweise kann der Schwellwert für den Körperschall eines Motors als Funktion der Ist-Drehzahl gewählt werden. Somit kann sich der Schwellwert für den Körperschall beispielsweise dynamisch mit variierender Motordrehzahl ebenfalls ändern.

Die erfassten Sensorwerte werden vorzugsweise jeweils mit den bestimmten Schwellwerten verglichen und in Abhängigkeit von einem Vergleichsergebnis wird bewertet, ob ein Fehler der Vorrichtung vorliegt oder nicht. Alternativ oder zusätzlich wird basierend auf den erfassten Sensorwerten vorzugsweise ein Ist-Zustand der Vorrichtung bestimmt und mit dem Soll-Zustand und/oder den Fehlerzuständen verglichen. In Abhängigkeit von einem Vergleichsergebnis wird vorzugsweise bewertet, ob ein Fehler der Vorrichtung vorliegt oder nicht.

Vorzugsweise wird eine vorgegebene Aktion durchgeführt, wenn bewertet wird, dass ein Fehler der Vorrichtung vorliegt. Beispielsweise kann als derartige Aktion eine Warnmeldung ausgegeben werden oder die Vorrichtung kann automatisch gestoppt werden. Ferner kann als vorgegebene Aktion eine Wartung vorgenommen und überprüft werden, ob tatsächlich ein Fehler vorliegt. Zweckmäßigerweise kann eine Reparatur des erkannten Fehlers als vorgegebene Aktion durchgeführt werden.

Die Erfindung eignet sich in vorteilhafter Weise für eine Vielzahl verschiedener technischer Vorrichtungen. Insbesondere weist die Vorrichtung eine rotierende Maschine auf, beispielsweise Pumpe, Kompressor, Turbine, oder auch eine rotierende elektrische Maschine, z.B. Motor und/oder Generator.

Beispielsweise kann die Vorrichtung auch einen Wärmetauscher, z.B. Plattenwärmetauscher oder ein spiralgewickelter Wärmetauscher, Verdampfer oder eine kryogene Kolonne aufweisen. Insbesondere kann die Vorrichtung als eine verfahrenstechnische Anlage ausgebildet sein oder als Komponente in einer derartigen verfahrenstechnischen Anlage eingesetzt sein. Eine derartige verfahrenstechnische Anlage kann beispielsweise eine Luftzerlegungsanlage oder allgemein eine Fluidzerlegungsanlage sein, eine Erdgasanlage, eine Wasserstoff- und Synthesegasanlage, eine Adsorptions- und Membrananlage, z.B. eine Druckwechseladsorptionsanlage, oder eine kryotechnische Anlage, z.B. zur Kühlung von Supraleitern und kalten Neutronenquellen, MRTs, Fusions- und Fissionsanwendungen oder bei der Verflüssigung von Helium und Wasserstoff.

Die Vorrichtung umfasst insbesondere mehrere Komponenten, wie beispielsweise Manipulatoren, Motoren, Aktoren und/oder Steuereinheiten.

Ferner weist die Vorrichtung insbesondere eine Vielzahl von Sensoren auf, mittels welcher jeweils eine spezielle Messgröße als Sensorwert erfasst werden kann, insbesondere jeweils an speziellen Komponenten der Vorrichtung. Bei den Sensoren kann es sich, je nach zu erfassender Größe, bspw. um Schwingungssensoren, Temperatursensoren, Luftdrucksensoren, Luftfeuchtigkeitssensoren, Drehzahlsensoren usw. handeln. Als Sensorwerte können beispielsweise Messwerte für Beschleunigung, Temperatur, Druck, Energie, Vibration, Körperschall, Drehzahl, Strom usw. von Komponenten der Vorrichtung bestimmt werden. Beispielsweise können derartige Sensoren jeweils als MEMS-Sensor, d.h. mikroelektromechanischer Sensor ausgebildet sein.

Eine erfindungsgemäße Recheneinheit, z.B. ein Steuergerät einer Vorrichtung, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine technische Vorrichtung, die gemäß einer bevorzugten Ausführungsform eines erfindungsgemäßen Verfahrens überwacht werden kann.
- Figur 2: zeigt eine bevorzugte Ausführungsform eines erfindungsgemäßen Verfahrens als ein Blockdiagramm.

### Detaillierte Beschreibung der Zeichnung

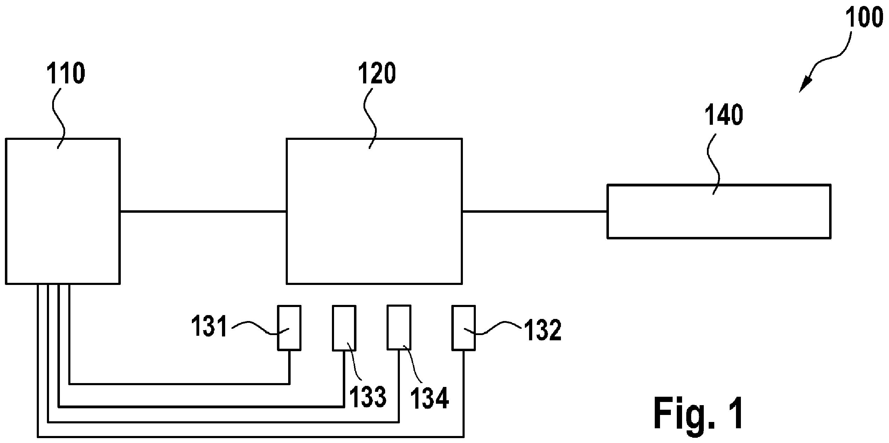

In Figur 1 ist eine technische Vorrichtung in Form einer Maschine mit einer Vielzahl von Maschinenkomponenten schematisch dargestellt und mit 100 bezeichnet.

Eine Maschinenkomponente 110 ist beispielsweise als eine Steuereinheit zum Steuern der Maschine 100 ausgebildet. Die Steuereinheit 110 kann beispielsweise als Speicherprogrammierbare Steuerung (SPS) ausgebildet sein. Eine Maschinenkomponente 120 ist z.B. als ein Kompressor ausgebildet und kann beispielsweise verwendet werden, um ein Fluid zu verdichten und einer weiteren Maschinenkomponente 140 zuzuführen. Weiterhin ist eine Vielzahl von Sensoren 131, 132, 133, 134 vorgesehen, beispielsweise ein erster Temperatursensor 131 zum Erfassen einer ersten Temperatur an einem ersten Lager und ein zweiter Temperatursensor 132 zum Erfassen einer zweiten Temperatur an einem zweiten Lager. Ferner sind beispielsweise ein Drehzahlsensor 133 und ein Körperschallsensor 134 vorgesehen, um eine Drehzahl bzw. Körperschallwerte eines Motors des Kompressors 120 zu erfassen.

Es versteht sich, dass die Maschine 100 noch weitere Maschinenkomponenten aufweisen kann, wie z.B. Manipulatoren, Aktoren, weitere Motoren, Walzen und Steuereinheiten. Die Maschine 100 kann ferner als Komponente übergeordneten Prozessanlage Anwendung finden, insbesondere in einer verfahrenstechnischen Anlage wie etwa einer Luftzerlegungsanlage oder allgemein einer Fluidzerlegungsanlage.

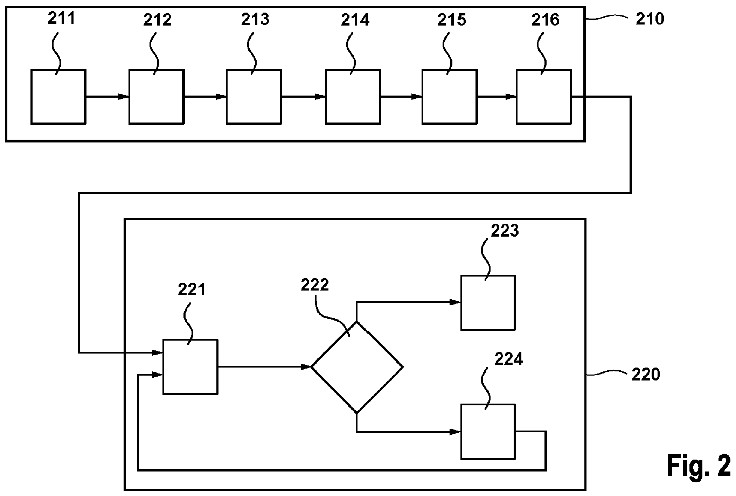

Es soll eine Überwachung der Maschine 100 durchgeführt werden, insbesondere dahingehend, ob der Kompressor 120 korrekt funktioniert oder eine Fehlfunktion aufweist. Zu diesem Zweck wird eine bevorzugte Ausführungsform eines erfindungsgemäßen Verfahrens durchgeführt, welches in Figur 2 schematisch als ein Blockdiagramm dargestellt ist.

Im Rahmen des Verfahrens wird zunächst im Zuge einer ersten Phase 210 ein Modell der Maschine 100 bestimmt. Dabei werden in einem Schritt 211 zunächst basierend auf einer theoretischen Betrachtung der Maschine 100 theoretische kausale Zusammenhänge zwischen Sensorwerten bestimmt, beispielsweise in Form einer Korrelationsmatrix ("raw dependency matrix").

Beispielsweise kann zu diesem Zweck in Abhängigkeit von physikalischen, technischen und chemischen Beziehungen der Maschine 100 bestimmt werden, dass ein erster theoretischer kausaler Zusammenhang zwischen Körperschallwerten und Drehzahlwerten besteht, welche mittels des Körperschallsensors 134 bzw. des Drehzahlsensors 133 erfassbar sind. Beispielsweise kann ferner bestimmt werden, dass ein zweiter theoretischer kausaler Zusammenhang zwischen der ersten Temperatur an dem ersten Lager und der zweiten Temperatur an dem zweiten Lager besteht, welche mittels der Temperatursensoren 131, 134 erfassbar sind.

Beispielsweise kann ferner ein dritter theoretischer kausaler Zusammenhang zwischen Temperaturwerten und Drehzahlwerten bestimmt werden, welche mittels der Temperatursensoren 131, 132 bzw. des Drehzahlsensors 133 erfassbar sind.

In einem Schritt 212 wird eine Datenanalyse durchgeführt, im Zuge derer Körperschall-, Temperatur- und Drehzahlwerte, die mittels der Sensoren 131, 132, 133, 134 erfasst wurden, statistisch ausgewertet werden. Beispielsweise können zu diesem Zweck Sensorwerte miteinander verglichen werden, welche in der SPS 110 während eines bisherigen Betriebs der Maschine 100 hinterlegt wurden. Im Zuge dieser Datenanalyse bzw. dieser statistischen Auswertung werden diese Sensorwerte auf statistische Korrelationen untereinander analysiert. Basierend auf dieser statistischen Auswertung werden statistische Korrelationen der Sensorwerte bestimmt, beispielsweise mittels des Verfahrens nach Pearson oder nach Spearman.

Beispielsweise kann im Zuge dieser statistischen Auswertung erkannt werden, dass eine erste statistische Korrelation zwischen Körperschallwerten und Drehzahlwerten besteht, eine zweite statistische Korrelation zwischen Werten der ersten Temperatur und der zweiten Temperatur und eine dritte statistische Korrelation zwischen Werten der zweiten Temperatur und den Drehzahlwerten.

Die in Schritt 211 bestimmten theoretischen kausalen Zusammenhänge und die in Schritt 212 bestimmten statistischen Korrelationen werden in Schritt 213 miteinander verglichen, um tatsächliche kausale Zusammenhänge der Sensorwerte zu bestimmen. Dabei wird beispielsweise die in Schritt 211 bestimmte Korrelationsmatrix mit den in Schritt 212 statistischen Korrelationen abgeglichen und es wird eine finale Korrelationsmatrix ("final dependency matrix") mit den tatsächlichen kausalen Zusammenhängen der Sensorwerte bestimmt.

Beispielsweise wird dabei ein erster tatsächlicher kausaler Zusammenhang zwischen Körperschallwerten und Drehzahlwerten bestimmt, ein zweiter tatsächlicher kausaler Zusammenhang zwischen Werten der ersten und der zweiten Temperatur und eine dritter tatsächlicher kausaler Zusammenhang zwischen Werten der zweiten Temperatur und den Drehzahlwerten.

In Schritt 214 wird basierend auf diesen tatsächlichen kausalen Zusammenhängen ein Modell der Maschine 120 bestimmt. Beispielsweise kann dieses Modell eine erste mathematische Beschreibung ("Funktion") der Körperschallwerte in Abhängigkeit von der Drehzahl umfassen, sowie eine zweite mathematische Beschreibung der zweiten Temperatur in Abhängigkeit von der ersten Temperatur und eine dritte mathematische Beschreibung der zweiten Temperatur in Abhängigkeit von der Drehzahl. Insbesondere können dabei Koeffizienten dieser drei Beschreibungen bzw. Beziehungen bestimmt werden. Beispielsweise können zu diesem Zweck lineare Regressionen durchgeführt werden. Koeffizienten dieser Funktionen bzw. dieser mathematischen Beschreibungen können beispielsweise mittels der Methode der kleinsten Quadrate (engl. "ordinary least squares", OLS) bestimmt werden.

In Schritt 215 wird das in Schritt 214 bestimmte Modell plausibilisiert bzw. präzisiert. Insbesondere werden zu diesem Zweck weitere Sensorwerte mittels der Sensoren 131, 132, 133, 134 erfasst und es wird eine lineare Regression dieser Vielzahl von Sensorwerten durchgeführt, insbesondere um die Koeffizienten der Beziehungen zu präzisieren.

Das Modell wird in Schritt 216 verwendet, um einen Soll-Zustand der Maschine 100 zu bestimmen. Dieser Soll-Zustand wird insbesondere durch Sensorwerte der Sensoren 131, 132, 133, 134 charakterisiert, die in einem fehlerfreien Betrieb der Maschine 100 erfasst werden können. Beispielsweise können zu diesem Zweck zulässige Schwellwerte bestimmt werden, innerhalb welcher sich die Sensorwerte im fehlerfreien Betrieb der Maschine 100 bewegen. Dieser Soll-Zustand bzw. diese Schwellwerte werden insbesondere in der SPS 110 hinterlegt.

Der Soll-Zustand bzw. die Schwellwerte werden daraufhin in einer zweiten Phase 220 verwendet, um die Maschine 100 auf Fehler hin zu überwachen. In dieser zweiten Phase 220 wird die Maschine 100 insbesondere regulär betrieben.

In einem Schritt 221 werden im laufenden Betrieb der Maschine 100 aktuelle Sensorwerte mittels der Sensoren 131, 132, 133, 134 erfasst. Insbesondere kann aus diesen erfassten Sensorwerten ein aktueller Ist-Zustand der Maschine 100 bestimmt werden.

In Schritt 222 werden die in Schritt 221 erfassten Sensorwerte mit den entsprechenden in Schritt 214 bestimmten Schwellwerten verglichen bzw. der bestimmte Ist-Zustand wird mit dem fehlerfreien Soll-Zustand verglichen.

Wenn dabei keiner der erfassten Sensorwerte den entsprechenden Schwellwert erreicht bzw. überschreitet, wird in Schritt 224 bewertet, dass kein Fehler der Maschine 100 bzw. des Kompressors 120 vorliegt und die Überwachung der Sensorwerte wird kontinuierlich fortgesetzt.

Wenn jedoch wenigstens einer der erfassten Sensorwerte den entsprechenden Schwellwert erreicht bzw. überschreitet, wird in Schritt 223 ein Fehler der Maschine 100 bzw. des Antriebs 120 erkannt. Daraufhin wird in Schritt 223 eine entsprechende Maßnahme durchgeführt, beispielsweise eine Wartung oder Reparatur der Maschine 100.

## Patentansprüche

1. Verfahren zum Erstellen eines Modells einer technischen Vorrichtung (100), insbesondere einer Maschine, eines Apparats oder einer Anlage,
wobei basierend auf einer theoretischen Betrachtung der Vorrichtung (100) theoretische kausale Zusammenhänge zwischen Sensorwerten von Sensoren (131, 132, 133, 134) der Vorrichtung (100) bestimmt werden (211),
wobei basierend auf einer statistischen Auswertung von durch die Sensoren (131, 132, 133, 134) erfassten Sensorwerten statistische Korrelationen zwischen den Sensorwerten der Sensoren (131, 132, 133, 134) der Vorrichtung (100) bestimmt werden (212),
wobei die theoretischen kausalen Zusammenhänge und die statistischen Korrelationen miteinander verglichen werden (213) und wobei basierend auf dem Vergleichsergebnis aus den theoretischen kausalen Zusammenhänge und den statistischen Korrelationen tatsächliche kausale Zusammenhänge zwischen den Sensorwerten von Sensoren (131, 132, 133, 134) der Vorrichtung (100) bestimmt, insbesondere ausgewählt werden (213), und
wobei basierend auf den tatsächlichen kausalen Zusammenhängen zwischen den Sensorwerten von Sensoren (131, 132, 133, 134) der Vorrichtung (100) ein Modell der Vorrichtung (100) bestimmt wird (214).

2. Verfahren nach Anspruch 1, wobei zur Bestimmung des Modells der Vorrichtung (100) Koeffizienten bezüglich der tatsächlichen kausalen Zusammenhänge zwischen den Sensorwerten von Sensoren (131, 132, 133, 134) der Vorrichtung (100) bestimmt werden (214).

3. Verfahren Anspruch 1 oder 2, wobei zur Bestimmung des Modells der Vorrichtung (100) eine lineare Regression durchgeführt wird (215).

4. Verfahren nach einem der vorstehenden Ansprüche, wobei das Modell der Vorrichtung (100) basierend auf durch die Sensoren (131, 132, 133) erfassten Sensorwerten plausibilisiert wird (215).

5. Verfahren zum Überwachen einer technischen Vorrichtung (100), wobei ein nach einem der vorstehenden Ansprüche erstelltes Modell der technischen Vorrichtung (100) verwendet wird.

6. Verfahren nach Anspruch 5, wobei in einem regulären Betrieb der Vorrichtung (100) Sensorwerte von den Sensoren (131, 132, 133) erfasst werden (221) und basierend auf diesen erfassten Sensorwerten und dem Modell der Vorrichtung (100) bewertet wird, ob ein Fehler der Vorrichtung (100) vorliegt (223) oder nicht (224).

7. Verfahren nach einem der vorstehenden Ansprüche, wobei basierend auf dem Modell der Vorrichtung (100) Schwellwerte für Sensorwerte und/oder ein Soll-Zustand der Vorrichtung (100) und/oder Fehlerzustände der Vorrichtung (100) bestimmt werden (216).

8. Verfahren nach Anspruch 6 und 7, wobei in dem regulären Betrieb der Vorrichtung (100)
die erfassten Sensorwerte jeweils mit den bestimmten Schwellwerten verglichen werden (222) und in Abhängigkeit von einem Vergleichsergebnis bewertet wird, ob ein Fehler der Vorrichtung (100) vorliegt (223) oder nicht (224) und/oder
basierend auf den erfassten Sensorwerten ein Ist-Zustand der Vorrichtung (100) bestimmt wird und mit dem Soll-Zustand und/oder den Fehlerzuständen verglichen wird (222) und in Abhängigkeit von einem Vergleichsergebnis bewertet wird, ob ein Fehler der Vorrichtung (100) vorliegt (223) oder nicht (224).

9. Verfahren nach Anspruch 7 oder 8, wobei eine vorgegebene Aktion durchgeführt wird, wenn bewertet wird, dass ein Fehler der Vorrichtung (100) vorliegt (223).

10. Recheneinheit (110) mit Mitteln zum Durchführen eines Verfahrens nach einem der Ansprüche 5 bis 9.

11. Computerprogramm, das eine Recheneinheit (110) dazu veranlasst, ein Verfahren nach einem der Ansprüche 5 bis 9 durchzuführen, wenn es auf der Recheneinheit ausgeführt wird.

12. Maschinenlesbares Speichermedium mit einem darauf gespeicherten Computerprogramm nach Anspruch 11.
